# EUROPEAN PATENT SPECIFICATION

(11) **EP 1 699 701 B1**
(45) Date of publication and mention of the grant of the patent: **27.06.2007**
(21) Application number: 04808833.0
(22) Date of filing: 28.12.2004
(51) Int. Cl.: B65B 35/54, B65G 47/53, B65G 47/08

(54) **APPARATUS FOR FEEDING GIMMICKS TO A MAIN CONVEYOR OF A CONVEYOR LINE**
VORRICHTUNG ZUM ZUFÜHREN VON WERBEGESCHENKEN ZU EINER HAUPTFÖRDEREINRICHTUNG EINER FÖRDERSTRASSE
DISPOSITIF SERVANT A INTRODUIRE DES GIMMICKS SUR LE CONVOYEUR PRINCIPAL D'UNE CHAINE DE TRANSPORT

(30) Priority: 29.12.2003 NL 1025141
(43) Date of publication of application: 13.09.2006
(73) Proprietor: Hendriks van de Weem Engineering & Consulting, 1507 DJ Zaandam (NL)
(72) Inventor: HENDRIKS VAN DE WEEM, Johannes, Gerardus, Maria, 1057 DJ Zaandam (NL)
(74) Representative: van Loon, C.J.J.
(86) International application number: PCT/NL2004/000917
(87) International publication number: WO 2005/063582

(56) References cited:
- EP-A- 0 775 632
- DE-A- 1 812 293
- GB-A- 955 144

## Description

The invention relates to an apparatus for feeding gimmicks to a main conveyor of a conveyor line.

Gimmicks are three-dimensional products whose dimensions are capricious to some extent. They are objects other than graphic products, which one would not primarily expect from a publisher's in a package of a newspaper, a magazine, or a letter with annexes. In this connection, a gimmick is understood not to be a CD, a DVD, a cassette or a like substantially rectangular product. For such substantially flat products, already feeding devices have been developed which can be described as pick & place devices which are provided with a hopper in which an operator can place stacks of the more or less flat products. This is not possible with gimmicks having a capricious three-dimensional shape.

Heretofore, gimmicks have therefore been placed on the main conveyor of a conveyor line for packaging, for instance, magazines, newspapers and the like, by hand. The maximum capacity that can be achieved in this way is about 2,500 gimmicks per hour. Since a normal packaging line for magazines nowadays features a capacity of about 18,000 products per hour, the addition of a gimmick to such a product leads to a dramatic decrease of the capacity of the packaging line.

Furthermore, EP-A-775 632 discloses an apparatus for feeding articles to main conveyor of a conveyor line, wherein the apparatus is provided with at least one conveyor, the at least one conveyor being provided with compartments each having such dimensions that one article is receivable therein.

The present invention contemplates an apparatus by means of which the gimmicks can be fed automatically, at least semi-automatically, to a main conveyor of a conveyor line.

To that end, the invention provides an apparatus which is provided with a sliding table having at least one free side where an operator can position himself, and with at least one conveyor, the at least one conveyor being provided with compartments each having such dimensions that one gimmick can be received therein, and wherein an inlet of the at least one conveyor aligns with the sliding table.

An operator randomly loads a number of gimmicks onto the sliding table, then manipulates them and each time slides a gimmick into a compartment of a conveyor. Preferably, more than one conveyor is provided, for instance four, such that the operator, during the travel of one conveyor, can load a compartment of another conveyor, stationary at that time, with a gimmick. Thus, minimal time is lost waiting for conveyor travel, since generally there is always a stationary empty compartment available which can be filled with a gimmick by the operator.

According to a further elaboration of the invention, the at least one conveyor can be a conveyor provided with projections, with a compartment being formed by the space between two successive projections.

Such conveyors provided with projections are relatively inexpensive and have as an advantage that they can convey a large number of different shapes. Preferably, each conveyor is bounded on opposite sides by upstanding edges, such that for each conveyor a channel is formed in which the gimmicks are advanced by the conveyor.

As already indicated above, preferably, several conveyors are provided. According to a further elaboration of the invention, the conveyors are drivable independently of each other. This provides the advantage that in use there is always bound to be a conveyor that is stationary, such that the compartment thereof that is situated adjacent the sliding table can be filled with a gimmick. Moreover, more than one conveyor provides for a greater buffer capacity. When for instance use is made of four parallel conveyors, and when, according to a further elaboration of the invention, in the or each conveyor in the active part there are 8-15 compartments, a buffer capacity of 32-60 gimmicks is obtained. When the frequency of conveyor travel is, for instance, once every 4 seconds, it takes 32-60 seconds for the total buffer capacity to be used up. That is amply sufficient time to fill the sliding table with new gimmicks.

According to a further elaboration of the invention, downstream of the discharge end of the or each conveyor, a receiving pocket may be provided in which a gimmick is receivable, the receiving pocket being provided with delivery means which are arranged for delivering the gimmick from the pocket to the conveyor line at a desired time.

With such a receiving pocket, the time of delivery can be accurately determined. As a result, the position of the gimmick relative to the product that is situated on the main conveyor is accurately determined.

This accuracy can be further enhanced when the delivery means actually perform a positive action to place the gimmick on the main conveyor. To that end, according to a further elaboration of the invention, the delivery means can comprise a bottom of the pocket which can be released. In addition, the delivery means can further comprise a pusher by means of which the gimmick is actively pushed onto the conveyor line. The releasable bottom of the pocket can comprise a flexible diaphragm which opens automatically under the influence of the force exerted by the pusher on the gimmick.

In order to prevent a situation where an empty compartment in one of the conveyors - which may occur, for instance, when the operator has accidentally failed to, or could not, fill a respective compartment - leads to non-delivery of a gimmick to the main conveyor, the apparatus, according to a further elaboration of the invention, can be provided with a control, while adjacent the discharge end of the or each conveyor a sensor is disposed which is arranged for sensing the presence and/or absence of a gimmick in a respective conveyor compartment situated adjacent the discharge end, or, if present, in the receiving pocket belonging to the respective conveyor, the control being arranged for driving the respective conveyor until the compartment and/or the receiving pocket possibly present is filled with a gimmick, such that in each case a gimmick is ready to be delivered. The sensors can be designed, for instance, as electronic eyes. It should be noted that the sensor does not need to be arranged above the last compartment of a respective conveyor, but that it is also possible for the sensor to be arranged above a second last, third last or fourth last compartment, so that the conveyor can for instance travel three positions in succession when the sensor has sensed that the last three compartments are empty.

In order to effect a good positioning of the gimmicks on the main conveyor in the conveying direction, the apparatus, according to a further elaboration of the invention, is preferably provided with a control, the control being connected to an encoder which produces signals that are indicative of the position of the main conveyor in the conveyor line.

Further, for the positioning of the gimmicks in transverse direction, it is favorable when, according to a further elaboration of the invention, at least the position of the discharge end of the at least one conveyor transverse to the conveying direction of the main conveyor is settable with respect to the main conveyor.

Further elaborations of the invention are described in the subclaims and will be further clarified hereinafter on the basis of an exemplary embodiment, with reference to the drawing.
Fig. 1 shows a magazine with a gimmick placed thereon, which are packaged in a common film package;
Fig. 2 shows a perspective top plan view of an exemplary embodiment of the apparatus;
Fig. 3 shows a perspective top plan view of the sliding table and the upstream ends of the conveyors of the apparatus;
Fig. 4 shows a side elevation of a second exemplary embodiment according to the invention;
Fig. 5 shows a perspective view of the exemplary embodiment represented in Fig. 4, with omission of the receiving pockets;
Figs. 6a, 6b show a side elevation and a top plan view, respectively, of the discharge ends of the conveyors of a third exemplary embodiment;
Figs. 7a, 7b show a side elevation and a top plan view, respectively, of the transition between the sliding table and the conveyors; and
Fig. 8 shows a side elevation of a receiving pocket with a pusher.

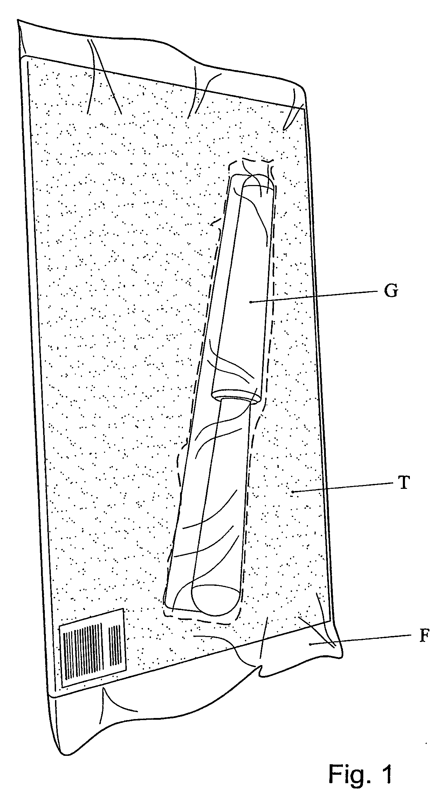

Fig. 1 shows a photograph of a magazine T which is packaged in film F. In the package there is also a gimmick G.

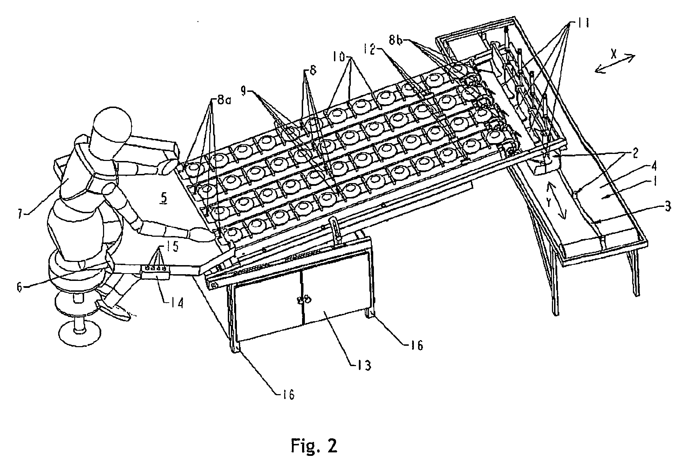

Fig. 2 shows an exemplary embodiment of an apparatus for feeding gimmicks G to a main conveyor 1 of a conveyor line. Such a conveyor line can for instance be conceived of as a packaging line which is provided with a packaging station in which film is provided around a magazine. Along the packaging line, for instance feeders may be arranged to feed magazines and annexes to the main conveyor. In the present exemplary embodiment, the main conveyor is designed as a conveyor chain 3, provided with projections 2, which is arranged to advance magazines, newspapers or documents over a conveying surface 4.

The apparatus for feeding gimmicks G to the main conveyor 1 is provided with a sliding table 5 which is accessible for an operator 7 from a free side 6. Further, the apparatus is provided with four conveyors 8. Each conveyor 8 is provided with compartments 9 in which in each case one gimmick G is receivable. In the present exemplary embodiment, the compartments are separated from each other by projections 10. The width of a compartment is in the range of 80-300 mm. The length of a compartment is in the range of 80-300 mm. In the present exemplary embodiment, in an active, upwardly facing part of a conveyor 8 there are about nine compartments 9. The inlets 8a of the conveyors 8 align with the sliding table 5. In the present exemplary embodiment, the outlets 8b are provided with receiving pockets 11, which will be further discussed hereinafter. At one of the last compartments 9 of each conveyor 8, a sensor 12 is arranged by means of which it can be sensed whether the respective last compartment 9 is filled with a gimmick G. Further, the apparatus shown is provided with a control cabinet 13 and with a control panel 14 with a number of control buttons 15. Preferably, the discharge end 8b of the conveyors 8 is displaceable relative to the main conveyor 1 in the direction indicated by X in the drawing. By varying the timing of delivery of a gimmick G, the position of the gimmick G relative to the projections 2, viewed in the conveying direction Y of the main conveyor 1, can be varied. Accordingly, the gimmick G can thus be accurately positioned relative to the products that are being conveyed by the main conveyor 1. The displacement of the discharge ends 8b relative to the main conveyor 1 can for instance be effected by displacing the whole apparatus relative to the main conveyor 1. To that end, the apparatus can for instance be placed on rails, which extend perpendicularly to the main conveying direction Y of the main conveyor 1. However, it is also possible that the sliding table 5 and the conveyors 8 are displaceably connected to a frame 16 which is fixedly set up on the floor.

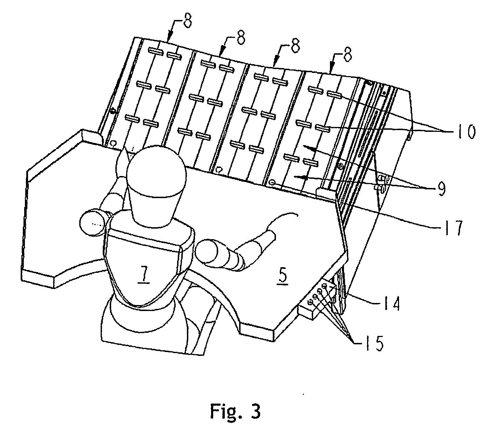

Fig. 3 shows a top plan view of the sliding table 5 and the inlet ends 8a of the apparatus shown in Fig. 2. Fig. 3 further shows clearly that next to each inlet 8a, a warning light 17 is arranged which starts to burn when the associated conveyor 8 starts to move and which burns while this conveyor 8 moves. As already indicated above, the conveyors 8 are drivable independently bf each other. Through the presence of the warning lights 17, the risk of injury to the operator 7 by a moving projection 10 of a conveyor 8 is prevented.

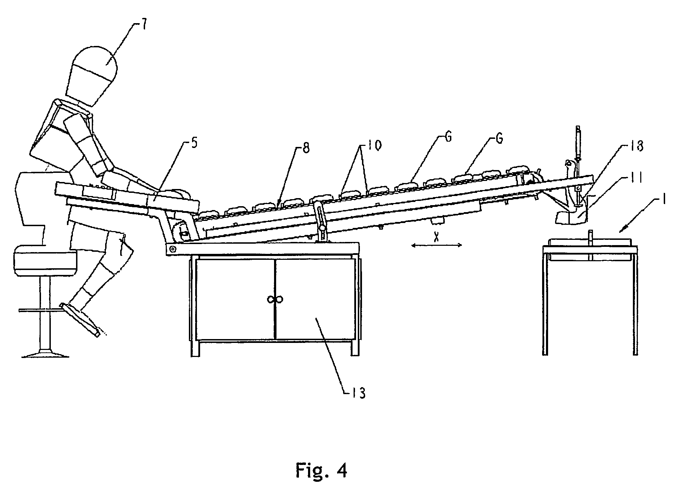

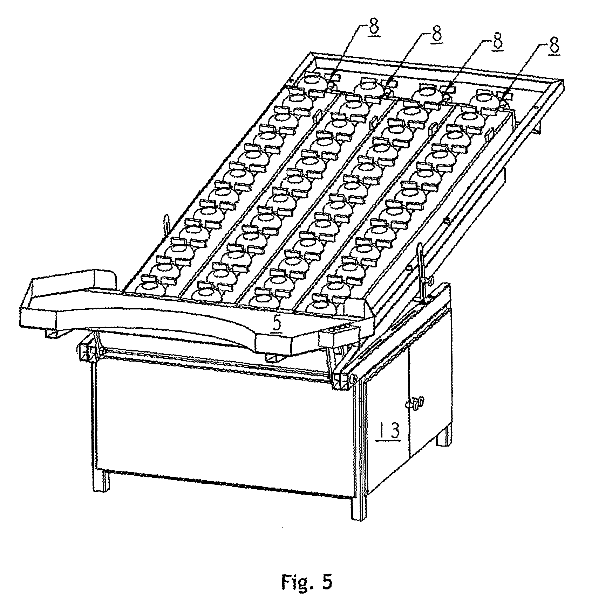

Figs. 4 and 5 show a second exemplary embodiment, in which the sliding table 5 is arranged at a downward inclination, while the conveyors 8 are arranged at an upward inclination. The angles of inclination are adjustable. Further, Fig. 4 clearly represents the receiving pocket 11, above which a pusher 18 is arranged to be moved up and down. In the exemplary embodiment of Fig. 4, the control cabinet 13 is fixedly arranged on the floor, and the conveyors 8 with the sliding table 5 are slidably connected with the control cabinet 13, such that displacement in X-direction is possible.

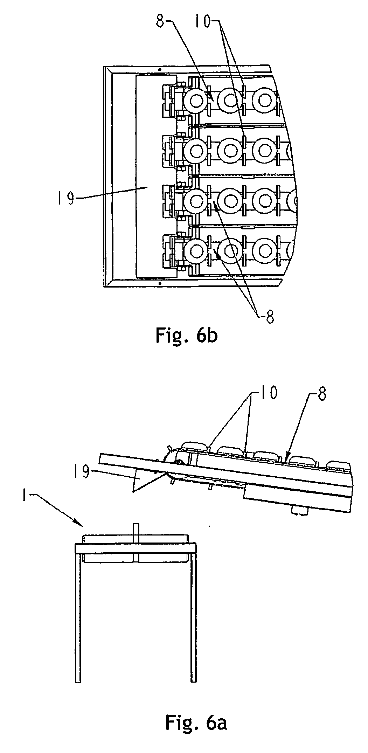

Figs. 6a and 6b show the discharge end 8b of a simple embodiment of the apparatus according to the invention, that is, of an embodiment without receiving pockets 11. Instead, a guide channel 19 is provided, along which the projections 10 can pass and over which the gimmicks G can slide on to be subsequently deposited onto the main conveyor 1. This channel can be a flexible flap.

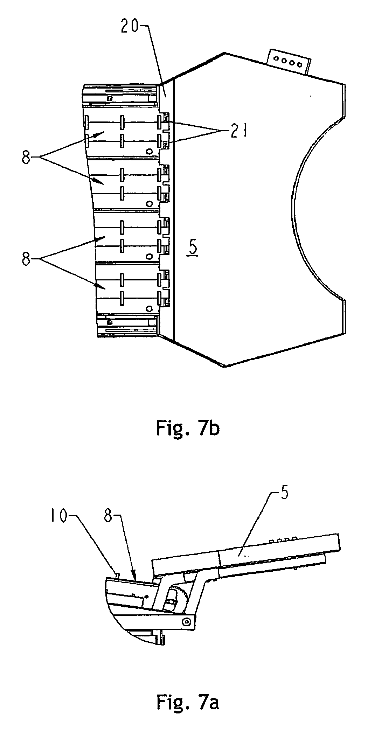

Figs. 7a and 7b show an exemplary embodiment of a possible transition between the sliding table 5 and the conveyors 8. In this exemplary embodiment, this transition is formed by a flexible flap 20 over which the operator 7 can slide the products to an upstream compartment 9 of a conveyor 8. Provided in the flexible flap 20 are recesses 21 via which the projections 10 of the conveyor 8 can pass the flap 20. These recesses may also be integrated in the sliding table.

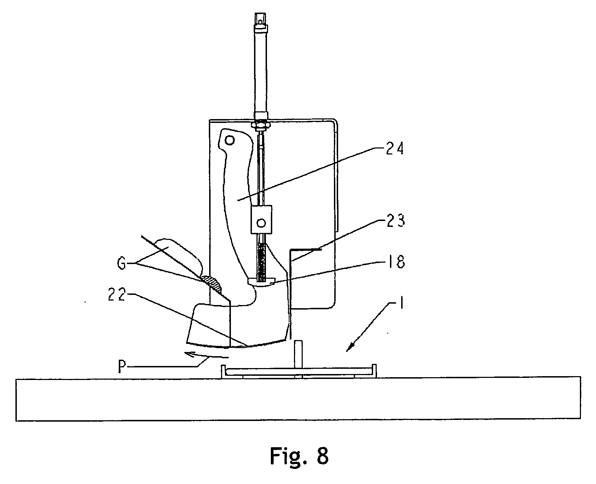

Fig. 8 shows a schematic side elevation of a receiving pocket 11 with pusher 18. The receiving pocket 11 is provided with a bottom wall 22 and a rear wall 23. The bottom wall 22 is operatively connected with the pusher 18 via a control rod 24. Upon downward movement of the pusher 18, the bottom wall 22 is pushed up by the control rod 24 in the direction of the arrow P. Simultaneously, the resiliently suspended pusher 18 pushes the gimmick G in downward direction onto the main conveyor 1.

Instead of the exemplary embodiment of the receiving pocket 11 as shown, the receiving pocket can be provided with a flexible bottom wall which is designed as a kind of diaphragm which opens under the influence of a force exerted on it. The pusher 18 can for instance produce this force by pressing on the gimmick G. Under the influence of the force, the diaphragm-like flexible wall will open, so that the gimmick G is delivered. In Fig. 8, a large gimmick G is represented, and a small gimmick G is shown in hatching.

An operator 7 now and then loads a number of gimmicks G onto the sliding table 5. Next, he manipulates the gimmicks G and slides them in succession into a compartment 9 of a conveyor 8. In this way, the operator 7 fills the compartments 9 of the various conveyors 8. Next, the main conveyor 1 can be started and the conveyors 8 and the receiving pockets 11, if present, are driven such that a gimmick G is delivered in front of each projection 2 of the main conveyor 1. After that, the operator 7 can fill the empty compartments 9 sufficiently fast with gimmicks G to keep up with the speed of the main conveyor 1.

The control of the apparatus can be designed such that the position in Y-direction is determined by the timing of delivery. To that end, the apparatus may be provided with an adjusting button 15 by means of which the time of delivery of a gimmick G to the main conveyor 1 is settable, such that the delivery position of the gimmick G in the conveying direction Y of the main conveyor 1 is settable.

Further, the position in X-direction can be set by the proper positioning of the discharge ends 8b, or of the receiving pockets 11, relative to the main conveyor 1. The intermittently driven conveyors 8 can for instance make a traveling step every 2-6 seconds, for instance every 4 seconds, so that the operator 7 in each case has amply sufficient time to place a gimmick G in a compartment 9.

Depending on the number of conveyors 8 and the frequency of the traveling steps, a capacity of about 3,000-8,000 gimmicks G per hour can be realized, which is a considerable improvement over the capacity hitherto possible, which involved an operator 7 placing the gimmicks G directly onto a main conveyor.

It is clear that the invention is not limited to the exemplary embodiment described but that various modifications are possible within the framework of the invention as defined by the claims.

## Claims

1. An apparatus for feeding gimmicks (G) to a main conveyor (1) of a conveyor line, wherein the apparatus is provided with a sliding table (5) having at least one free side (6) where an operator (7) can position himself, and with at least one conveyor (8), the at least one conveyor (8) being provided with compartments (9) each having such dimensions that one gimmick (G) is receivable therein, and wherein an inlet (8a) of the at least one conveyor (8) aligns with the sliding table (5).

2. An apparatus according to claim 1, wherein the at least one conveyor (8) is a conveyor provided with projections (10) wherein a compartment (9) is formed by the space between two successive projections (10).

3. An apparatus according to claim 1 or 2, wherein at least four parallel conveyors (8) are provided which are each drivable independently of each other.

4. An apparatus according to any one of the preceding claims, wherein in the or each conveyor (8), in the active, upwardly facing part, 8-15 compartments (9) are situated.

5. An apparatus according to any one of the preceding claims, wherein downstream of the discharge end (8b) of the or each conveyor (8) a receiving pocket (11) is provided in which a gimmick (G) is receivable, the receiving pocket (11) being provided with delivery means (18, 22) which are arranged for delivering the gimmick (G) from the pocket (11) to the main conveyor line (1) at a desired time.

6. An apparatus according to claim 5, wherein the delivery means comprise a bottom (22) of the pocket (11) which can be released.

7. An apparatus according to claim 5 or 6, wherein the delivery means comprise a pusher (18) by means of which the gimmick (G) is actively pushed onto the main conveyor line (1).

8. An apparatus according to claim 6 or 7, wherein the releasable bottom (22) of the pocket (11) comprises a flexible diaphragm which opens automatically under the influence of the force exerted by the pusher (18) on the gimmick (G).

9. An apparatus according to any one of the preceding claims, wherein the apparatus is provided with a control (13), wherein adjacent the discharge end (8b) of the or each conveyor (8) a sensor (12) is disposed which is arranged for sensing the presence and/or absence of a gimmick (G) in a compartment (9) of the respective conveyor (8) situated near the discharge end (8b), or, if present, in the receiving pocket (11) belonging to the respective conveyor (8), the control being arranged for driving the respective conveyor (8) until said compartment (9) and/or the receiving pocket (11) possibly present is filled with a gimmick (G), such that in each case a gimmick (G) is ready for delivery.

10. An apparatus according to claim 9, wherein the sensor (12) is an electronic eye.

11. An apparatus according to any one of the preceding claims, wherein the apparatus is provided with a control, the control being connected to an encoder which produces signals that are indicative of the position of the main conveyor (1) in the conveyor line.

12. An apparatus according to any one of the preceding claims, wherein the or each conveyor (8) is provided with a warning light which burns when the conveyor (8) starts to move or moves.

13. An apparatus according to any one of the preceding claims, wherein the conveyors (8) are driven intermittently, wherein the conveyors (8) at each driving event are moved forward at least one compartment (9), while a driving event occurs every 2-6 seconds, more particularly every 4 seconds, per conveyor (8).

14. An apparatus according to any one of the preceding claims, wherein the apparatus is provided with an adjusting button (15) by means of which the time of delivery of a gimmick (G) to the main conveyor (1) is settable, such that the delivery position of the gimmick (G) in the conveying direction of the main conveyor (1) is settable.

15. An apparatus according to any one of the preceding claims, wherein at least the position of the discharge end (8b) of the at least one conveyor (8) transverse to the conveying direction of the main conveyor (1) is settable relative to the main conveyor (1).

16. An apparatus according to any one of the preceding claims, wherein the delivery capacity of the apparatus is in the range of 3,000-8, 000 gimmicks (G) per hour, more particularly about 6,000 gimmicks (G) per hour.

17. An apparatus according to any one of the preceding claims, wherein the width of a compartment (9) is in the range of 80-300 mm and wherein the length of a compartment (9) is in the range of 80-300 mm.

## Patentansprüche

1. Vorrichtung zum Zuführen von Gimmicks (G) zu einer Hauptfördereinrichtung (1) eines Fließbandes, wobei die Vorrichtung mit einem Schiebetisch (5) mit zumindest einer freien Seite (6) versehen ist, an der eine Bedienperson (7) sich platzieren kann, und mit zumindest einer Fördereinrichtung (8), wobei die zumindest eine Fördereinrichtung (8) mit Zellen (9) versehen ist, von denen jede solche Abmessungen aufweist, dass ein Gimmick (G) darin aufnehmbar ist, und bei der ein Einlauf (8a) der zumindest einen Fördereinrichtung (8) mit dem Schiebetisch (5) fluchtet.

2. Vorrichtung nach Anspruch 1, bei der zumindest eine Fördereinrichtung (8) eine Fördereinrichtung ist, die mit Vorsprüngen (10) versehen ist, wobei eine Zelle (9) durch den Raum zwischen zwei aufeinanderfolgenden Vorsprüngen (10) gebildet ist.

3. Vorrichtung nach Anspruch 1 oder 2, bei der zumindest vier parallele Fördereinrichtungen (8) vorgesehen sind, die jeweils unabhängig voneinander antreibbar sind.

4. Vorrichtung nach einem der vorstehenden Ansprüche, bei der in der oder jeder Fördereinrichtung (8) in dem aktiven nach oben weisenden Teil 8-15 Zellen (9) angeordnet sind.

5. Vorrichtung nach einem der vorstehenden Ansprüche, bei der stromabwärts des Ausgabeendes (8b) der oder jeder Fördereinrichtung (8) eine Aufnahmetasche (11) vorgesehen ist, in der ein Gimmick (G) aufnehmbar ist, wobei die Aufnahmetasche (11) mit einer Abgabeeinrichtung (18, 22) versehen ist, die zum Ausgeben des Gimmicks (G) aus der Tasche (11) auf das Hauptförderband (1) zu einem gewünschten Zeitpunkt angeordnet ist.

6. Vorrichtung nach Anspruch 5, bei der die Ausgabeeinrichtung einen Boden (22) der Tasche (11) enthält, der gelöst werden kann.

7. Vorrichtung nach Anspruch 5 oder 6, bei der die Ausgabeeinrichtung einen Ausstoßer (18) enthält, vermittels dessen das Gimmick (G) aktiv auf das Hauptförderband (1) geschoben wird.

8. Vorrichtung nach Anspruch 6 oder 7, bei der der lösbare Boden (22) der Tasche (11) ein flexibles Diaphragma enthält, das sich automatisch unter dem Einfluss der Kraft öffnet, die durch den Ausstoßer (18) auf das Gimmick (G) ausgeübt wird.

9. Vorrichtung nach einem der vorstehenden Ansprüche, bei der die Vorrichtung mit einer Kontrolleinrichtung (13) versehen ist, bei der benachbart zu dem Auslassende (8b) der oder jeder Fördereinrichtung (8) ein Sensor (12) angeordnet ist, der zum Messen der Anwesenheit und/oder Abwesenheit des Gimmicks (G) in einer Zelle (9) der jeweiligen Fördereinrichtung (8) angeordnet ist, positioniert nahe dem Auslassende (8b) oder, sofern vorhanden, in der Aufnahmetasche (11), die zu der jeweiligen Fördereinrichtung (8) gehört, wobei die Kontrolleinrichtung zum Antreiben der jeweiligen Fördereinrichtung (8) angeordnet ist, so lange, bis die Zelle (9) oder die Aufnahmetasche (11), die möglicherweise gegenwärtig ist, mit einem Gimmick (G) gefüllt ist, so dass in jedem Falle ein Gimmick (G) zum Ausgeben bereitsteht.

10. Vorrichtung nach Anspruch 9, bei der der Sensor (12) ein elektronisches Auge ist.

11. Vorrichtung nach einem der vorstehenden Ansprüche, bei der die Vorrichtung mit einer Kontrolleinrichtung versehen ist, wobei die Kontrolleinrichtung mit einer Kodiereinrichtung verbunden ist, die Signale erzeugt, die die Position der Hauptfördereinrichtung (1) in dem Förderband anzeigen.

12. Vorrichtung nach einem der vorstehenden Ansprüche, bei der die oder jede Fördereinrichtung (8) mit einer Warnlampe versehen ist, die brennt, wenn die Fördereinrichtung (8) sich zu bewegen beginnt oder sich bewegt.

13. Vorrichtung nach einem der vorstehenden Ansprüche, bei der die Fördereinrichtungen (8) intermittierend angetrieben werden, wobei die Fördereinrichtungen (8) in jedem Antriebsfall um zumindest eine Zelle (9) vorwärts bewegt werden, während ein Antriebsfall alle 2-6 Sekunden, insbesondere alle 4 Sekunden, je Fördereinrichtung (8) auftritt.

14. Vorrichtung nach einem der vorstehenden Ansprüche, bei der die Vorrichtung mit einem Justierknopf (15) versehen ist, mit Hilfe dessen die Ausgabezeit eines Gimmicks (G) an die Hauptfördereinrichtung (1) so einstellbar ist, dass die Ausgabeposition des Gimmicks (G) in der Förderrichtung der Hauptfördereinrichtung (1) einstellbar ist.

15. Vorrichtung nach einem der vorstehenden Ansprüche, bei der zumindest die Position des Ausgabeendes (8b) der zumindest einen Fördereinrichtung (8) quer zu der Förderrichtung der Hauptfördereinrichtung (1) in Bezug auf die Hauptfördereinrichtung (1) einstellbar ist.

16. Vorrichtung nach einem der vorstehenden Ansprüche, bei der die Fördermenge der Vorrichtung im Bereich von 3.000 - 8.000 Gimmicks (G) pro Stunde, insbesondere etwa 6.000 Gimmicks (G) pro Stunde beträgt.

17. Vorrichtung nach einem der vorstehenden Ansprüche, bei der die Breite einer Zelle (9) im Bereich von 80-300 mm liegt und bei der die Länge einer Zelle (9) im Bereich von 80-300 mm liegt.

## Revendications

1. Appareil pour amener des gadgets promotionnels (G) sur un convoyeur principal (1) d'une chaîne de transport, où l'appareil est muni d'une table coulissante (5) ayant au moins un côté libre (6) où un opérateur (7) peut se positionner, et avec au moins un convoyeur (8), au moins un convoyeur (8) présentant des compartiments (9) ayant chacun des dimensions pour qu'un gadget promotionnel (G) puisse être reçu dans celui-ci, et où l'entrée (8a) d'au moins un convoyeur (8) est alignée avec la table coulissante (5).

2. Appareil selon la revendication 1, où au moins un convoyeur précité (8) est un convoyeur muni de saillies (10), où un compartiment (9) est formé par l'espace entre deux saillies successives (10).

3. Appareil selon la revendication 1 ou 2, où au moins quatre convoyeurs parallèles (8) sont prévus, chacun pouvant être entraîné indépendamment de chaque autre.

4. Appareil selon l'une des revendications précédentes, où dans le ou chaque convoyeur (8), dans la partie active orientée vers le haut, 8-15 compartiments (9) sont situés.

5. Appareil selon l'une des revendications précédentes, où en aval de l'extrémité d'évacuation (8b) du ou de chaque convoyeur (8), une poche de réception (11) est prévue dans laquelle un gadget promotionnel (G) peut être reçu, la poche de réception (11) présentant des moyens de distribution (18, 22) qui sont agencés pour distribuer le gadget promotionnel (G) de la poche (11) à la chaîne de transport principale (1) à un instant souhaité.

6. Appareil selon la revendication 5, où les moyens de distribution comprennent un fond (22) de la poche (11) qui peut être relâché.

7. Appareil selon la revendication 5 ou 6, où les moyens de distribution comprennent un poussoir (18) au moyen duquel le gadget promotionnel (G) est poussé activement sur la chaîne de transport principale (1).

8. Appareil selon la revendication 6 ou 7, où le fond relâchable (22) de la poche (11) comprend une membrane flexible qui s'ouvre automatiquement sous l'effet de la force exercée par le poussoir (18) sur le gadget promotionnel (G).

9. Appareil selon l'une des revendications précédentes, où l'appareil présente une commande (13), où d'une manière adjacente à l'extrémité d'évacuation (8b) du ou de chaque convoyeur (8), un capteur (12) est disposé qui est agencé pour détecter la présence et/ou l'absence d'un gadget (G) dans un compartiment (9) du convoyeur respectif (8) situé près de l'extrémité d'évacuation (8b) ou bien, si présent, dans la poche de réception (11) appartenant au convoyeur respectif (8), la commande étant agencée pour entraîner le convoyeur respectif (8) jusqu'à ce que ledit compartiment (9) et/ou la poche de réception (11) éventuellement présente soit remplie d'un gadget (G) de sorte que dans chaque cas un gadget (G) est prêt à être distribué.

10. Appareil selon la revendication 9, où le capteur (12) est un oeil électronique.

11. Appareil selon l'une des revendications précédentes, où l'appareil présente une commande, la commande étant reliée à un codeur qui produit des signaux qui indiquent la position du convoyeur principal (1) dans la chaîne de convoyeur.

12. Appareil selon l'une des revendications précédentes, où le ou chaque convoyeur (8) présente une lumière d'avertissement qui s'allume lorsque le convoyeur (8) commence à fonctionner ou fonctionne.

13. Appareil selon l'une des revendications précédentes, où les convoyeurs (8) sont entraînés par intermittence, où les convoyeurs (8) à chaque événement d'entraînement sont déplacés vers l'avant selon au moins un compartiment (9), un événement d'entraînement se produisant chaque 2-6 secondes, plus particulièrement chaque 4 secondes, par convoyeur (8).

14. Appareil selon l'une des revendications précédentes, où l'appareil présente un bouton d'ajustement (15) au moyen duquel l'instant de la distribution d'un gadget (G) sur le convoyeur principal (1) est réglable, de telle sorte que la position de distribution du gadget (G) dans la direction de convoyage du convoyeur principal (1) est réglable.

15. Appareil selon l'une des revendications précédentes, où au moins la position de l'extrémité d'évacuation (8b) d'au moins un convoyeur précité (8) transversal à la direction de convoyage du transporteur principal (1) est réglable par rapport au convoyeur principal (1).

16. Appareil selon l'une des revendications précédentes, où la capacité de distribution de l'appareil se situe dans la plage de 3.000-8.000 gadgets (G) par heure, plus particulièrement est d'environ 6.000 gadgets (G) par heure.

17. Appareil selon l'une des revendications précédentes, où la largeur d'un compartiment (9) est dans la plage de 80-300 mm, et où la longueur d'un compartiment (9) est dans la plage de 80-300 mm.
